# EUROPEAN PATENT APPLICATION

(11) **EP 1 424 486 A1**
(43) Date of publication of application: **02.06.2004**
(21) Application number: 03006563.5
(22) Date of filing: 24.03.2003
(51) Int. Cl.: F02F 7/00, F02B 75/04, F02B 41/04, F02B 75/32

(54) **Structure of high-performance engine**

(71) Applicant: Meyer, Siegfried, 86732 Oettingen (DE)
(72) Inventor: Meyer, Siegfried, 86732 Oettingen (DE)
(74) Representative: Casalonga, Axel

(57) **Abstract**

A high-performance engine is constructed to include a cylinder (1), a piston (2) adapted to reciprocate in the cylinder, a crank (7), a link (3) of substantially Z-shaped profile coupled between the crank (7) and the piston (2), the link having a through hole (31) in the top end, an eccentric barrel (4) mounted in the through hole (31) and two stop blocks (32,32') at two sides adjacent to the through hole, and two planet gear sets (5,5') fastened pivotally with the pivot pin (6) of the piston (2) for synchronous rotation with the eccentric barrel (4) within a limited angle to shorten down stroke of the piston (2).

## Description

### BACKGROUND OF THE INVENTION

### 1. Field of the Invention:

The present invention relates an engine and, more particularly, to a high-performance engine, which imparts an upward pressure to buffer the down stroke of the piston, so as to increase the compression ratio of the engine during the explosive stroke, enhancing the output of the engine.

### 2. Description of the Related Art:

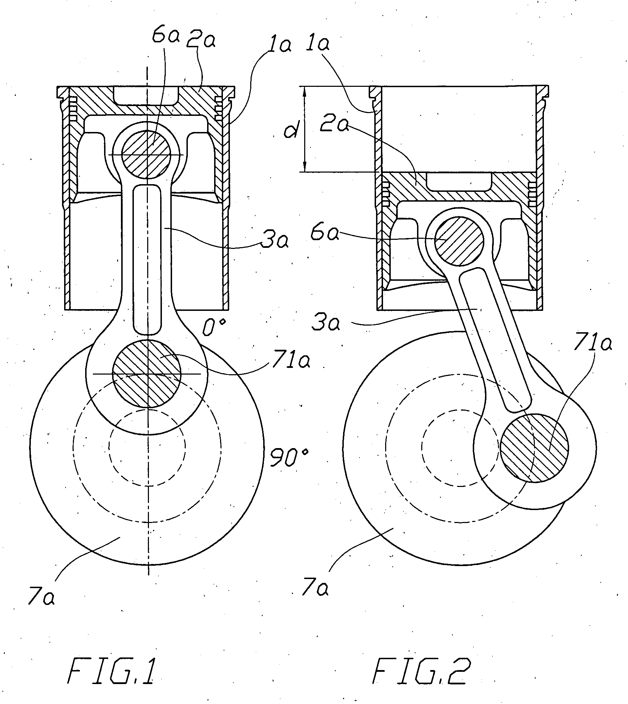

FIGS. 1 and 2 show the structure and operation of an engine according to the prior art. As illustrated, the engine comprises a cylinder **1a**, a piston **2a** reciprocating in the cylinder **1a**, a crank **7a**, and a link **3a**, which has one end pivoted to the piston **2a** by a pivot pin **6a** and the other end pivoted to the crank **7a**. As illustrated, the link **3a** is a straight member coupled between the piston **2a** and the crank **3a**. During reciprocating motion of the piton **2a**, the link **3a** forces the crank **7a** to rotate. The maximum torque of the crank **7a** is the radius of the rotation of the crank arm **71a**. The engine is ignited to explode when the piston moved to the upper limit position, i.e., the dead line position where the center of the piston and the center of the link and the center of the crank are vertically aligned in a line. At this time, the arm of force is minimized (zeroed), and the volume of the chamber of the cylinder is minimized, providing the best compression ratio. Therefore, this time is the best time for explosion. When passed over the dead line, the piston starts to move downwards, and the best compression ratio and the best explosion time cannot be maintained. The maximum output of the engine is when the crank moved from 0° toward 90° (the distance of displacement "**d**" of the piston). After this angle, the output of the engine is gradually reduced. The output power of the engine has a great concern with the variation of the volume of the cylinder chamber. When the volume of the cylinder chamber relatively increased, the explosion pressure is relatively reduced, resulting in a reduction of output power of the engine. On the contrary, when the volume of the cylinder chamber is relatively reduced during this stage and same explosion pressure is maintained, the fuel mixture can be completely burned to relatively increase the output power of the engine.

Further, in order to obtain the optimum compression ratio, the engine igniting time must be before the dead line. The engine provides no power output or a negative power before the dead line after the explosion. This drawback results in low engine performance, a waste of fuel energy, and a big amount of exhaust gas. Further, because the piston is reciprocated at a high speed when the combustion chamber of the engine is ignited to explode, fuel gas is not completely burned before a next cycle. This problem reduces the efficiency of the engine and, causes the engine to produce much waste gas.

Therefore, it is desirable to have a high-performance engine that eliminates the aforesaid drawbacks.

### SUMMARY OF THE INVENTION

The present invention has been accomplished under the circumstances in view. It is the main object of the present invention to provide a high-performance engine, which enhances the output, saves fuel gas, and reduces the production of waste gas. According to the invention, the high-performance engine comprising a cylinder, a piston adapted to reciprocate in the cylinder, the piston being provided with a transversely extended pivot pin, a crank, and a link, the link having a first end pivoted to the pivot pin of the piston and a second end pivoted to a crank arm of the crank, wherein the link has a transverse mounting through hole in the first end, two stop blocks symmetrically disposed at two sides adjacent to the transverse mounting through hole, and a barrel mounted in the transverse mounting through hole, the barrel having an eccentric locating hole through two ends thereof; two planet gear set are symmetrically provided at two sides of the link and fastened pivotally with the pivot pin, the planet gear sets each comprising a flat gear mount, the flat gear mount having a through hole aimed at the eccentric locating hole of the barrel, an arched rack disposed at a bottom side, an axle perpendicularly extended from a front side thereof and spaced between the through hole and arched rack of the respective flat gear mount, and a stop block protruded from a back side thereof and stopped at one side of one stop block of the link, a planet gear fastened pivotally with the axle and meshed with the arched rack, and a transmission gear inserted through the through hole of the flat gear mount and meshed with the planet gear, the transmission gear having a shaft fitted into the eccentric locating hole of the barrel for synchronous rotation with the barrel and an axial center through hole axially extended through the gear shaft and coupled to the pivot pin. According to another aspect of the present invention, the first and second ends of the link are curved and turned in reversed directions, forming a Z-shaped profile, so that when the crank arm of the crank moved to 0°, the line of action of force of the link extends over the outer diameter of the crank arm of the crank.

### BRIEF DESCRIPTION OF THE DRAWINGS

FIG. 1 is a sectional view of an engine according to the prior art.
FIG. 2 is similar to FIG. 1 but showing the link moved to 90°.
FIG. 3 is a sectional view of showing the basic principle of the present invention.
FIG. 3A is similar to FIG. 3 but showing the link moved.
FIG. 4 is an exploded view of the engine according to the present invention.

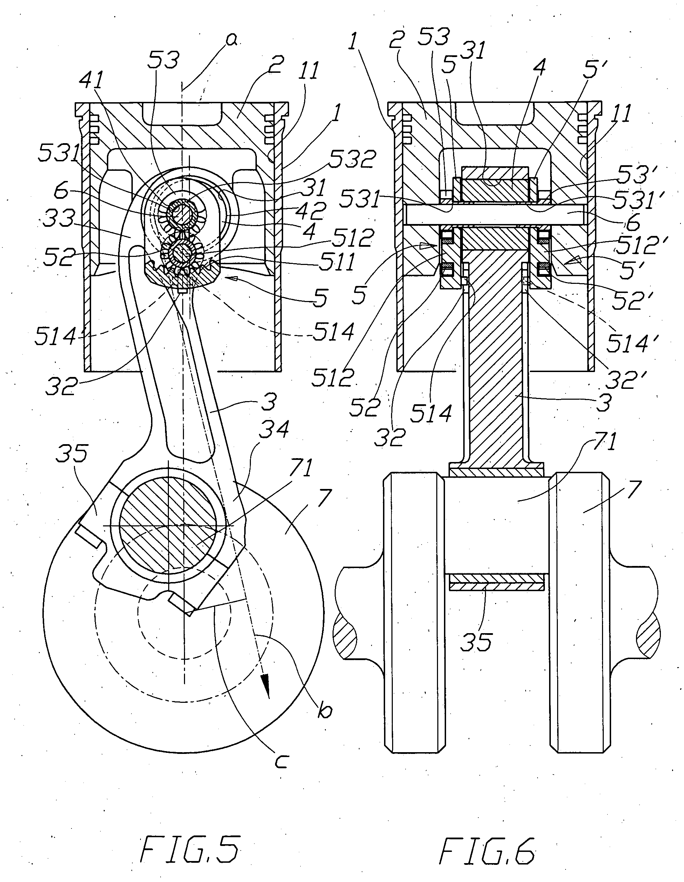

FIG. 5 is a side view in section of the engine according to the present invention.
FIG. 6 is another sectional view of the engine according to the present invention.
FIG. 7 is a sectional view showing the crank moved to 0° according to the present invention.
FIG. 7A is a sectional view of FIG. 7.
FIG. 8 is a sectional view showing the crank moved to 90° according to the present invention.
FIG. 8A is a sectional view of FIG. 8.
FIG. 9 is a sectional view showing the crank moved to 180° according to the present invention.
FIG. 9A is a sectional view of FIG. 9.
FIG. 10 is a sectional view showing the crank moved to 270° according to the present invention.
FIG. 10A is a sectional view of FIG. 10.
FIG. 11 illustrates the status of the present invention and the status of the prior art design when the crank moved to 0°.
FIG. 12 illustrates the status of the present invention and the status of the prior art design when the crank moved to 45°.
FIG. 13 illustrates the status of the present invention and the status of the prior art design when the crank moved to 90°
FIG. 14 illustrates the status of the present invention and the status of the prior art design when the crank moved to 180°
FIG. 15 illustrates the status of the present invention and the status of the prior art design when the crank moved to 270°.

### DETAILED DESCRIPTION OF THE PREFERRED EMBODIMENT

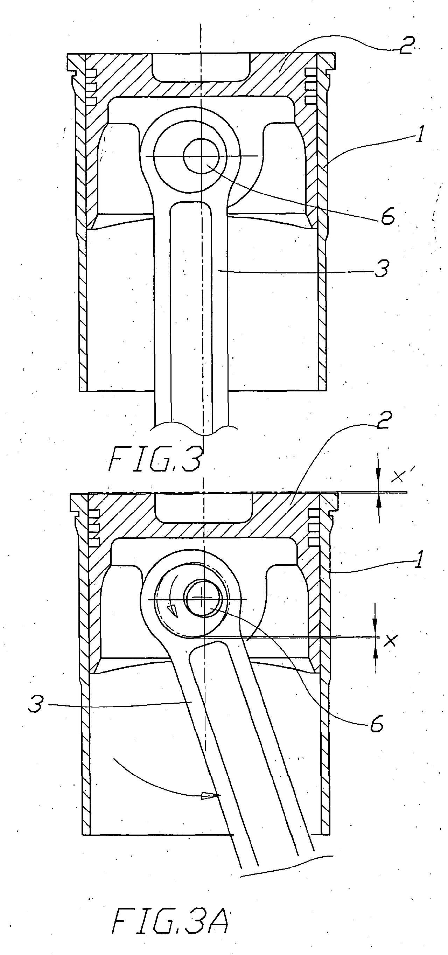

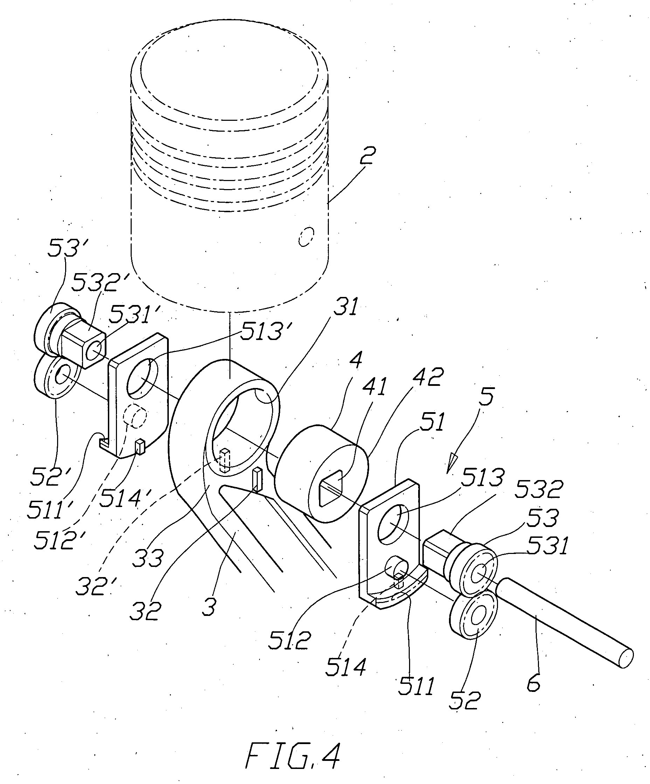

Referring to FIGS. 3 and 3A, the basic principle of the present invention is shown comprising a cylinder **1**, a piston **2** adapted to reciprocate in the cylinder **1**, and a link **3**. The link **3** has a top end eccentrically pivoted to a transversely extended pivot pin **6** at the piston **2**, and a bottom end coupled to the crank arm of a crank (not shown). Because the center of the crank and the length of the link **3** are fixed, the amount of eccentricity **x** is absorbed by the upward shifting **x'** of the piston **2**. The amount of shifting of the piston **2** is subject to the angle of the eccentricity of the link **3**. However, due to the limitation of the angle of oscillation of the link **3**, the amount of upward shifting **x'** of the piston **2** is limited. In order to increase the amount of upward shifting **x'** of the piston **2**, the design shown in FIGS. 4∼6 is invented.

Referring to FIGS. 4∼6, a high-performance engine in accordance with the present invention comprises a cylinder **1**, a piston **2** adapted to reciprocate in the cylinder **1**, and a link **3**. The link **3** has a top end pivoted to the piston **2**, and a bottom end fixedly mounted with a connector **35**, which is fastened pivotally with the crank arm **71** of a crank **7**.

The link **3** has a transverse mounting through hole **31** in the top end, and two stop blocks **32** and **32'** symmetrically disposed at two sides adjacent to the transverse mounting through hole **31**. A barrel **4** is mounted in the transverse mounting through hole **31** of the link **3**, having an eccentric locating hole **41** through the ends. The eccentric locating hole **41** is a non-circular through hole, for example, a rectangular through hole. A first planet gear set **5** and a second planet gear set **5'** are symmetrically provided at two sides of the link **3**. Each planet gear set **5** or **5'** comprises a flat gear mount **51** or **51'**, a planet gear **62** or **52'**, and a transmission gear **53** or **53'**. The gear mount **51** or **51'** has a through hole **513** or **513'** aimed at the eccentric locating hole **41** of the barrel **4**, an arched rack **511** or **511**' disposed at the bottom side, an axle **512** or **512**' perpendicularly extended from the front side and spaced between the through hole **513** or **513**' and the arched rack **511** or **511**', and a stop block **514** or **514'** protruded from the back side corresponding to one stop block **32** or **32**' of the link **3**. The planet gear **52** or **52**' is fastened pivotally with the axle **512** or **512**' and meshed with the arched rack **511** or **511'**. The transmission gear **53** or **53'** is inserted through the through hole **513** or **513'** of the gear mount **51** or **51'** and meshed with the planet gear 52 or 52', having a non-circular gear shaft **532** or **532'** fitted into the eccentric locating hole **41** of the barrel **4** and an axial center through hole **531** or **531'** axially extended through the non-circular gear shaft **532** or **532'**. A pivot pin **6** is inserted through the through hole **513** and **513'** of the gear mounts **51** and **51'** and fixedly mounted inside the piston **2**. In order to increase the angle of oscillation of the link **3**, the link **3** is made having a substantially Z-shaped profile with two ends **33** and **34** curved and extended in reversed directions. As an alternate form of the present invention, only one planet gear set **5** is provided. In this case, the gear mount **51** is provided with two stop blocks **514** and suspended at two sides of the corresponding stop block **32** of the link **3**.

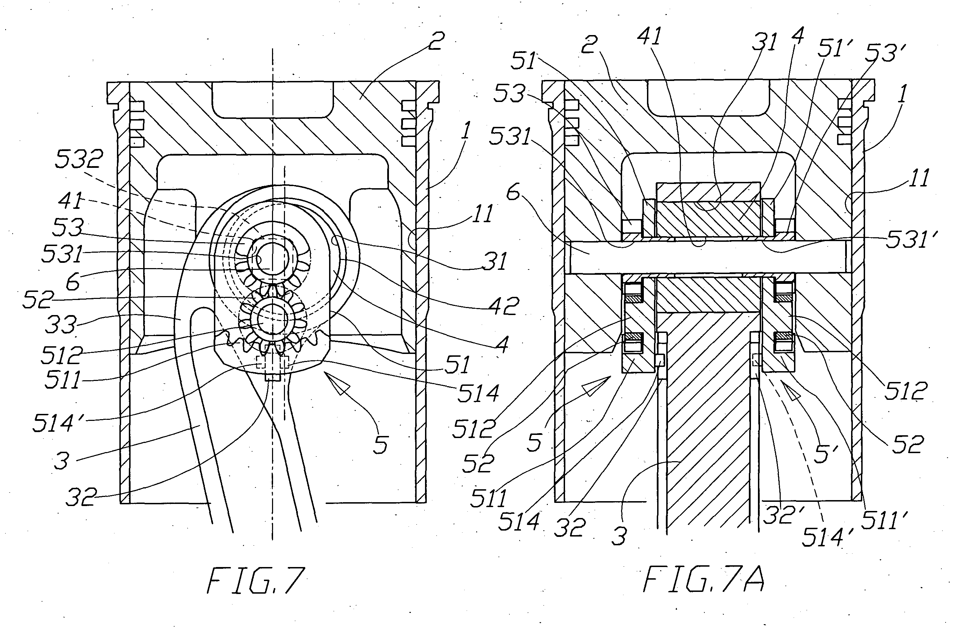

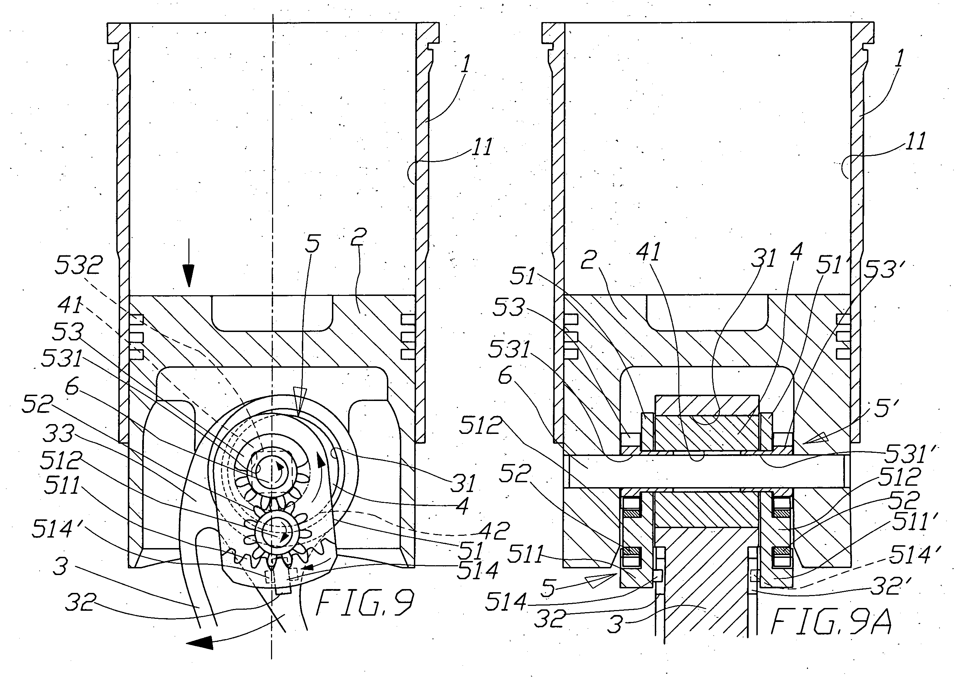

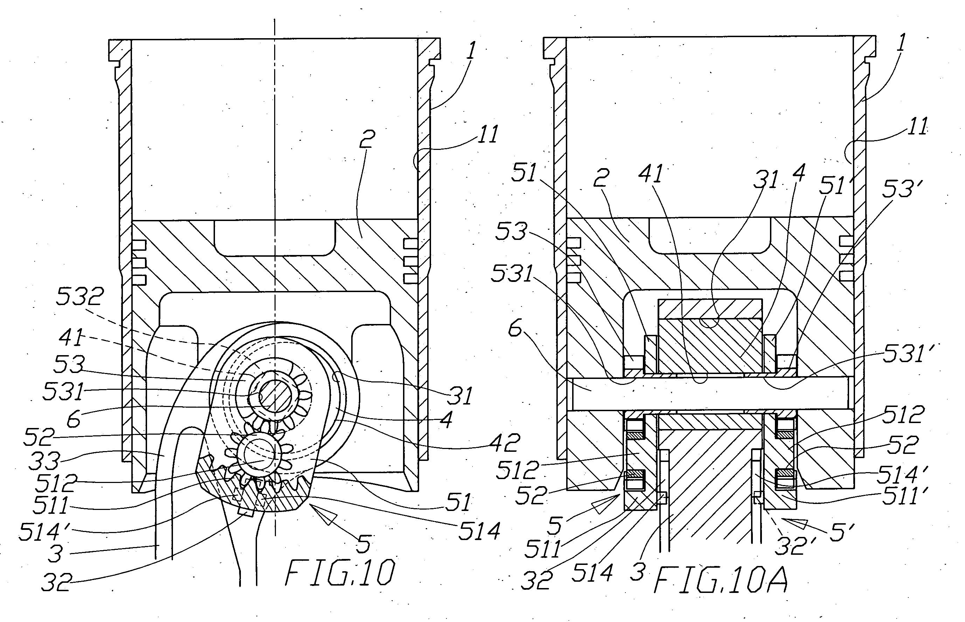

The operation of the present invention is outlined hereinafter with reference to FIGS. 7∼10. When the piston **2** moved to the upper limit position (the crank **7** moved to 0°), as shown in FIGS. 7 and 7A, the maximum eccentricity **42** of the eccentric barrel **4** is in the horizontal direction (the right side of the center line **a**). When the link **3** turned rightwards, the stop block **32** moves the stop block **514** of the gear mount **51** of the first planet gear set **5** rightwards, thereby causing the transmission gear **53** to rotate clockwise, and therefore the maximum eccentricity **42** is turned downwards to force the lower part of the periphery of the transverse mounting through hole **31** of the link **3**. Because the other end of the link **3** is coupled to the crank **7**, downward turning of the maximum eccentricity **42** causes the link **3** to lift the pivot pin **6** and the piston **2,** increasing the distance between the center of the pivot pin **6** and the center of the crank arm **71** of the crank **7** and postponing the downward moving time of the piston **2**. This action can be explained in a reversed way, i.e., the link **2** should pull the piston **2** downwards when forced by the crank arm **71**. However, because the link **3** oscillates when pulled downwards, the barrel **4** is rotated, causing the eccentricity **42** to compensate the downward displacement of the link **3**. Therefore, the mount of downward displacement of the piston **2** is relatively smaller than the amount of downward displacement of the link **3**. Because the volume of the cylinder chamber **11** is minimized at this times, fuel gas is completely burned. When the crank **7** moved to 90° as shown in FIGS. 9 and 9A, the link **3** is reversed (started to turn leftwards). When the link **3** moving leftwards, the other stop block **32**' of the link **3** forces the stop block **514**' of the gear mount **51**' leftwards, thereby causing the arched rack **514**' to rotate the planet gear **52**' and then the transmission gear **53**'. Therefore the maximum eccentricity **42** is turned upwards (counter-clockwise) to push the upper part of the periphery of the transverse mounting through hole **31** of the link **3**, causing the barrel **4** to be rotated in the reversed direction to make a reverse compensation. At this time, the amount of downward displacement of the piston **2** is rapidly increased (downward displacement of the link plus the eccentric amount of reverse compensation). When the crank arm **71** moved to 180°, the distance between the center of the pivot pin **6** and the center of the crank arm **71** of the crank **7** returns to the distance without compensation of eccentricity. When the engine continuously operated, as shown in FIGS. 10 and 10A, the link **3** keeps turning backwards, the first planet gear set **5** is moving continuously in the reversed direction, thereby causing the eccentricity **42** to be returned to make reverse compensation, increasing the compression ratio of the piston **2** to enhance the output of the engine without changing the distance between the crank arm and the center of the link.

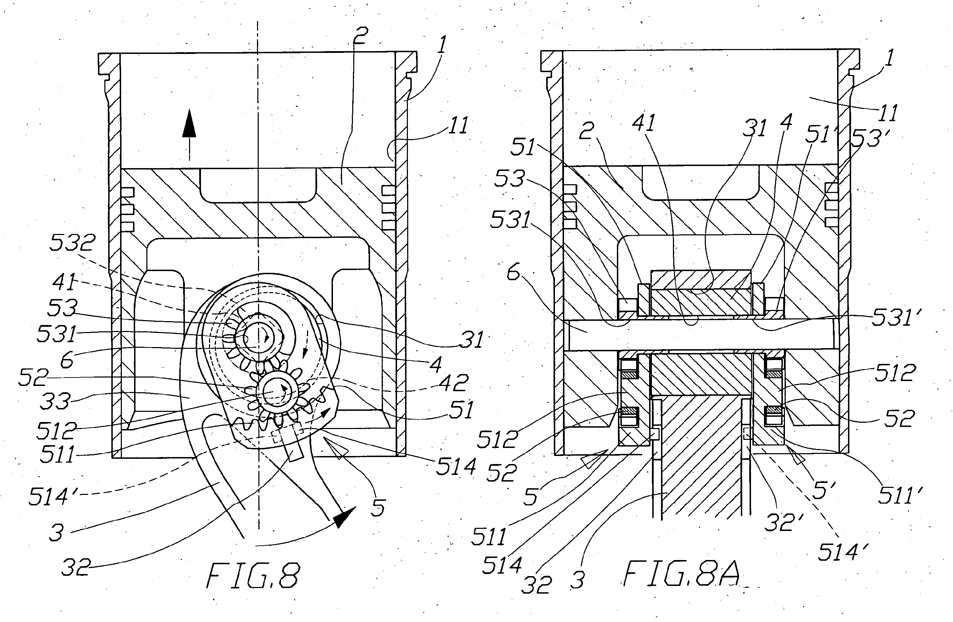

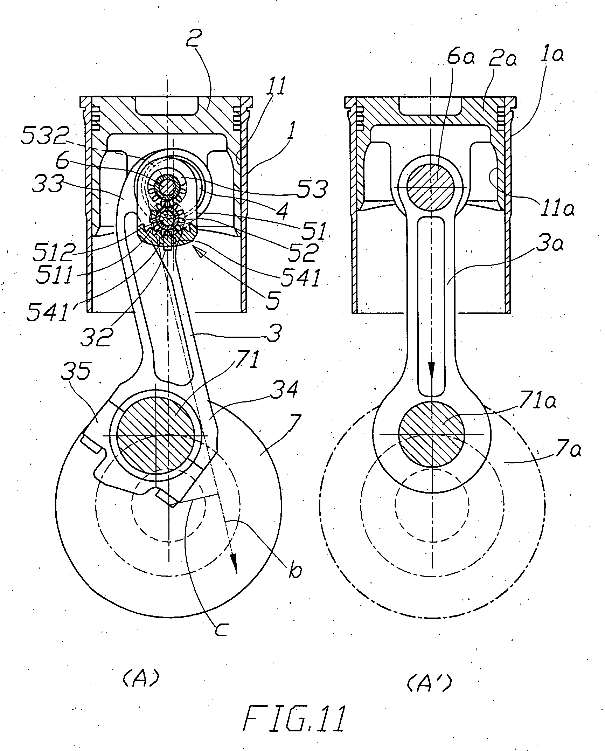

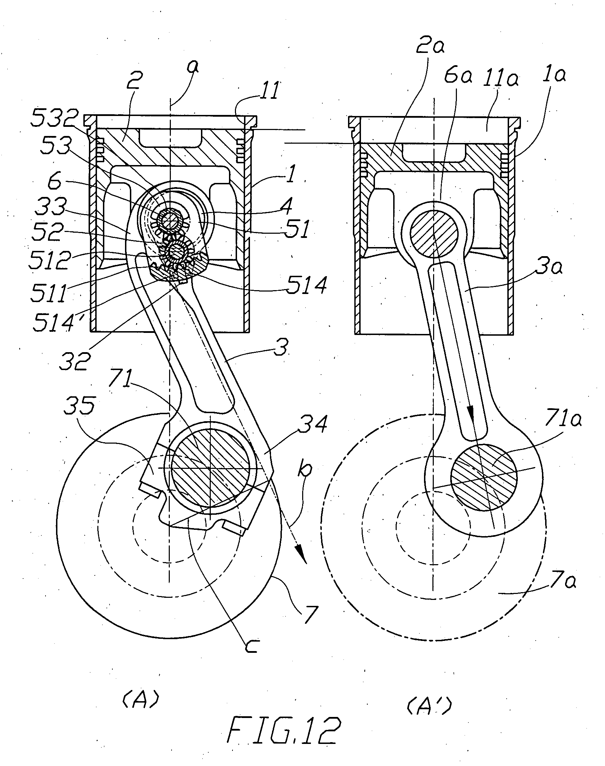

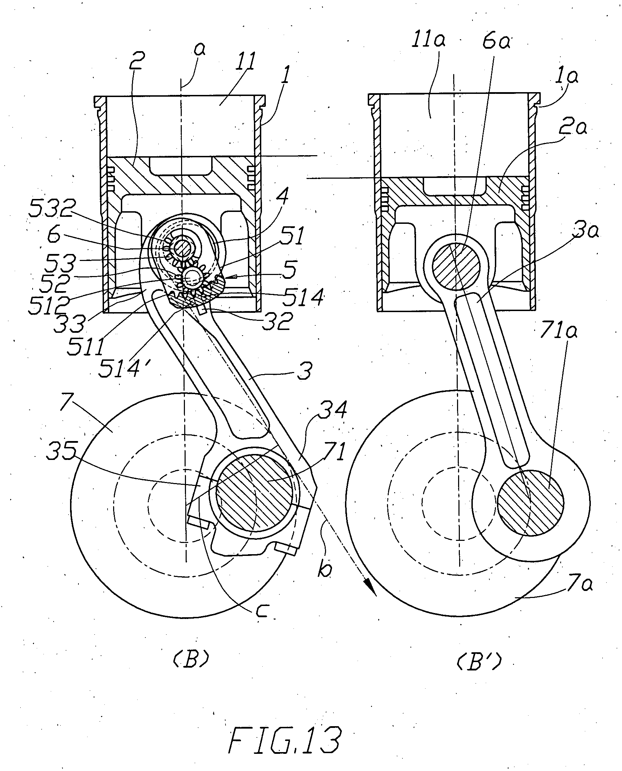

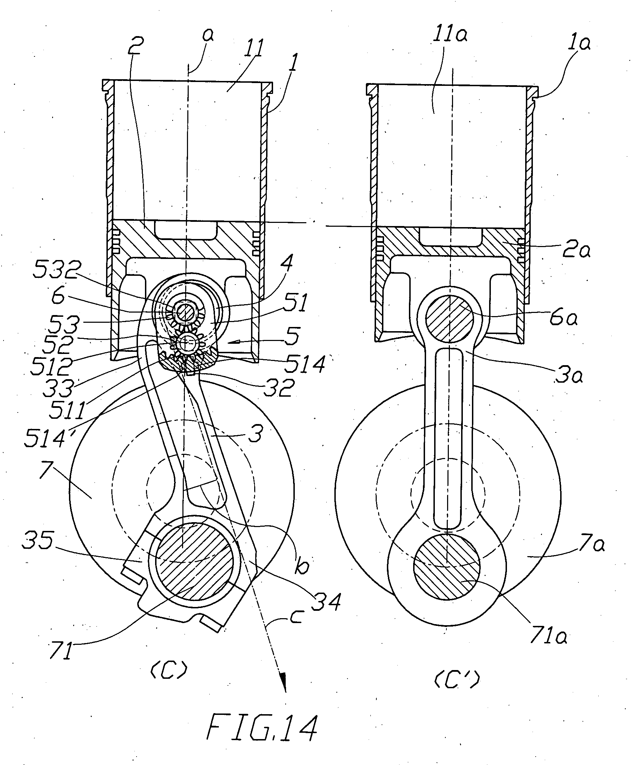

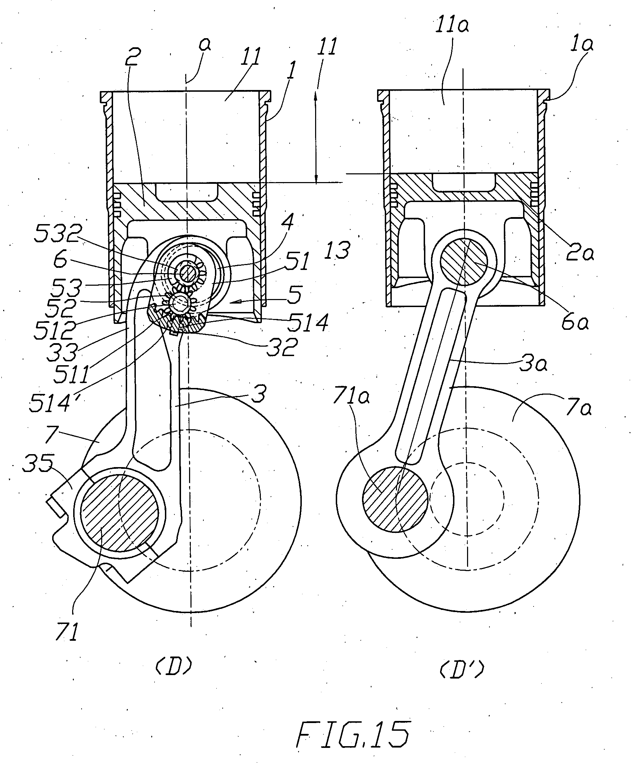

FIGS. 11∼15 show a comparison between the invention and the prior art design in which **A'∼E'** show the actions of the prior art design; **A∼E** show the actions of the present invention. With reference to FIG. 11, when the crank arm moved to 0°, the piston of the prior art design and the piston of the present invention are moved to the upper limit position. When the engine ignited to start the explosive stroke, the output force reaches the maximum status. At this time, the torque of the prior art design is on the dead line and zeroed. Due to the effect of the curved ends **33** and **34**, the amplitude of oscillation of the link **3** of the present invention is relatively increased, and the line of applied force **b** is biased to one side of the center line **a** between the center of the piston **2** and the center of the crank arm **71** at this time, and therefore the arm of force **c** of the link **3** has a certain length, producing a great output torque. When the crank arm **71** moved to 45° as shown in FIG. 12, the arm of force **c** of the link **3** reaches the maximum status. At this time, the piston of the prior art design has been moved downwards to a distance, the pressure of the cylinder chamber of the engine of the prior art design IGS. 8 and 9 show the crank **16** moved to 15° and 30° respectively. As shown in FIGS. 8 and 9, the piston of the prior art design is reducing (piston thrust force is reducing), therefore the output of the engine is less efficient. However, the arm of force **c** of the link according to the present invention is relatively longer than the prior art design, the piston **2** moves downwards to a limited distance only (about one half of the downward displacement of the piston of the prior art design), the pressure of the cylinder chamber of the engine of the present invention reaches the high level, and the downward displacement speed of the piston **2** is relatively slower, enabling fuel mixture to be fully burned to produce a high output. When the crank arm **71** moved to 90° as shown in FIG. 13, the pressure of the cylinder chamber of the prior art design is released, unable to work on the crank arm. At this time, the cylinder chamber of the engine of the present invention still provides a thrust force to move the crank. When the crank arm **71** moved to 180° as shown in FIG. 14, the piston of the prior art design and the piston of the present invention are moved to about the same position, therefore the time of the whole explosive stroke is about the same. When the crank arm **71** moved over 180°, the piston **2** starts to discharge air, the eccentric barrel **4** of the present invention makes a reverse compensation continuously, and the upward displacement of the piston **2** of the present invention is relatively slower than the prior art design, and therefore the discharging pressure of the present invention is relatively lower than the prior art design. At this time, the flywheels (not shown) at the crank arm are moved over 0° at a high speed, the inertia rotary energy of the flywheels is continuously increasing. When the crank arm **71** moved to 270° as shown in FIG. 15, the reverse compensation of the eccentric barrel **4** reaches the maximum status. When passed over this point, the piston moves rapidly upwards to discharge air. When the flywheels moved to 90°, the inertia rotary energy reaches the maximum status, achieving best working efficiency.

In a four-cylinder four-stroke engine as an example, when the crank arm **71** moved to 90° as shown in FIG. 13, the pressure of the cylinder chamber of the prior art design is zeroed, unable to work on the crank arm. At this time, the cylinder chamber of the present invention still provides a thrust force to move the crank, providing a kinetic energy to move the zero-position piston and link of the other set at the opposite side (not shown) over the upper limit position. Therefore, the engine works smoothly. When continuously operated, the crank arm is turned backwards, the eccentric barrel starts to make a reverse compensation, causing the piston to move downward rapidly. When moved to 180° as shown in FIG. 14, the piston of the prior art design and the piston of the present invention are at a similar position, therefore the time of the whole explosive stroke is about the same. When the crank arm moved over 180°, the eccentric barrel **4** of the present invention makes a reverse compensation continuously, and the upward displacement of the piston **2** of the present invention is relatively slower than the prior art design, and therefore the discharging pressure of the present invention is relatively slower than the prior art design. At this time, the third piston (not shown) is at the explosion status, the thrust force is not completely outputted. The low discharging pressure reduces resisting force from the third piston, enabling the power to work fully as shown in FIG. 15. When moved to 270°, the reverse compensation of the eccentric barrel reaches the maximum status, and thereafter the link is moved forwards, and the piston is moved upwards rapidly to discharge air. When the crank arm moved to 315°, the fourth piston (not shown) is at 45°, i.e., the maximum output point, enabling waste gas to be rapidly discharged, so as to complete explosion, working and discharging strokes, achieving best performance of the engine.

Further, during the intake stage as shown in FIGS. 11∼14, the intake speed is slow at the initial stage, enabling fuel gas to be well mixed with air. When at the end of the intake stroke as shown in FIG. 15, the invention and the prior art design are at about the same position, i.e., the invention achieves a high performance under the same volume of the cylinder.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A high-performance engine comprising a cylinder, a piston adapted to reciprocate in said cylinder, said piston being provided with a transversely extended pivot pin, a crank, and a link, said link having a first end pivoted to the pivot pin of said piston and a second end pivoted to a crank arm of said crank, wherein said link has a transverse mounting through hole in the first end, two stop blocks symmetrically disposed at two sides adjacent to said transverse mounting through hole, and a barrel mounted in said transverse mounting through hole, said barrel having an eccentric locating hole through two ends thereof; two planet gear set are symmetrically provided at two sides of said link and fastened pivotally with said pivot pin, said planet gear sets each comprising a flat gear mount, said flat gear mount having a through hole aimed at the eccentric locating hole of said barrel, an arched rack disposed at a bottom side, an axle perpendicularly extended from a front side thereof and spaced between the through hole and arched rack of the respective flat gear mount, and a stop block protruded from a back side thereof and stopped at one side of one stop block of said link, a planet gear fastened pivotally with said axle and meshed with said arched rack, and a transmission gear inserted through the through hole of said flat gear mount and meshed with said planet gear, said transmission gear having a shaft fitted into the eccentric locating hole of said barrel for synchronous rotation with said barrel and an axial center through hole axially extended through said gear shaft and coupled to said pivot pin.

2. The high-performance engine as claimed in claim 1, wherein the eccentric locating hole of said barrel has a polygonal cross section; the shaft of said transmission gear has a polygonal cross section fitting the eccentric locating hole of said barrel.

3. The high-performance engine as claimed in claim 1, wherein the first and second ends of said link are curved and turned in reversed directions, forming a Z-shaped profile, so that when the crank arm of said crank moved to 0°, the line of action of force of said link extends over the outer diameter of the crank arm of said crank.

4. A high-performance engine comprising a cylinder, a piston adapted to reciprocate in said cylinder, said piston being provided with a transversely extended pivot pin, a crank, and a link, said link having a first end pivoted to the pivot pin of said piston and a second end pivoted to a crank arm of said crank, wherein said link has a transverse mounting through hole in the first end, a stop block disposed at one side adjacent to said transverse mounting through hole, and a barrel mounted in said transverse mounting through hole, said barrel having an eccentric locating hole through two ends thereof; a planet gear set is provided at one side of said link and fastened pivotally with said pivot pin, said planet gear set comprising a flat gear mount, said flat gear mount having a through hole aimed at the eccentric locating hole of said barrel, an arched rack disposed at a bottom side, an axle perpendicularly extended from a front side thereof and spaced between the through hole and arched rack of the respective flat gear mount, and two stop blocks protruded from a back side thereof and disposed at two sides of the stop block of said link, a planet gear fastened pivotally with said axle and meshed with said arched rack, and a transmission gear inserted through the through hole of said flat gear mount and meshed with said planet gear, said transmission gear having a shaft fitted into the eccentric locating hole of said barrel for synchronous rotation with said barrel and an axial center through hole axially extended through said gear shaft and coupled to said pivot pin.
